Europäisches Patentamt

(19) European Patent Office

Office européen des brevets

(11) Publication number: **0 115 677**
**A1**

## (12) EUROPEAN PATENT APPLICATION

(21) Application number: **83307389.3**

(22) Date of filing: **05.12.83**

(51) Int. Cl.³: **F 16 L 1/04, E 02 F 7/10**

(30) Priority: **03.12.82 GB 8234554**
**14.03.83 GB 8306983**

(43) Date of publication of application: **15.08.84**
**Bulletin 84/33**

(84) Designated Contracting States: **IT**

(71) Applicant: **MULTIFINE LIMITED, Farm Road Brackley Industrial Estate, Brackley Northants (GB)**

(72) Inventor: **Wayte, Noel Roger, 24 Myers Way, Charlton Banbury Oxon (GB)**

(74) Representative: **Alisop, John Rowland et al, c/o Edward Evans & Co. Chancery House 53-64 Chancery Lane, London, WC2A 1SD (GB)**

㉔ **A float.**

(57) A float for a steel pipe surface dredging line formed of snugly fitting inner and outer sleeves (1, 2) each of which are composed of two sleeve parts (3, 4) and (5, 6) respectively.

The construction as described, may be readily dismantled in use. This is advantageous and cost saving, in that it means for example that the whole unit does not have to be discarded when localised damage occurs as in the prior art, rather only that particular part damaged i.e. one of the outer sleeve parts, has to be replaced. Moreover since the inner sleeve (2) may constitute 60% of the buoyancy required, loss of buoyancy due to outer sleeve damage does not render the whole unit ineffective as is possible with single shelled units known in the prior art.

The sleeves (1, 2) which are hollow, may be either foam filled, of strengthened with internal struts (101). With this latter construction a port P in the outer sleeve 2 may be provided so that the sleeve can be selectively filled with water, for example, so varying the buoyancy on site.

"A Float"

FIELD OF THE INVENTION

The present invention relates to a float particularly but not exclusively for floatably supporting the steel pipes of a water surface dredging line.

BACKGROUND ART

In some dredging operations in river estuaries, and shipping channels close to coastlines, the dredged material is conveyed to shore through a floating steel pipeline.

A conventional floating pipeline for such purposes comprises a number of steel pipes connected together by ball joints and floating on steel pontoons. This is perfectly acceptable in some situations but where heavy seas or rough swells are encountered the danger of a pontoon capsizing is much increased and this places a distinct limitation on operational capability.

To counter this problem dredging lines comprising a number of steel pipes connected together by self-floating rubber hoses have been developed. To maintain such a line at water level, the steel pipes have to be provided with buoyancy and this is achieved by surrounding each pipe with attached floation units which can be individually loaded to the required buoyancy taking into account such factors as currents, wind, tidal conditions, maximum swell and the material to be dredged.

One-piece floats are known for such purposes formed of an outer sheath of filament wound glass reinforced polyester filled with polyurethane foam to provide the buoyancy required. The length of the float is substantially the length of the steel pipe on which it is to be mounted, and the inner pipe dimensioned so that the steel tube can be threaded through it during assembly of the complete pipeline. A typical float for this type of application would have a diameter of 1400 mm and a length of 10 metres for mounting to a steel pipe 12 metres long which is an extremely bulky item, and the assembly of a steel pipeline of a necessarily considerable length is a difficult labour intensive and time-consuming operation. If therefore, and this is encountered in practice, damage to one or more of the floats say in the middle of

-2-

the pipeline, occurs, the pipeline loses its buoyancy with the result that the whole length of the pipeline has to be dragged to shore, the hose connectors uncoupled, and the floats dismantled one by one after removal of the retaining flanges until the defective float is reached which is then removed, replaced, the pipeline re-assembled and towed again out to the dredging unit.

Such problems have been somewhat mitigated by surrounding a respective steel pipe in the pipeline with a number of removable float units each composed of a pair of arcutate float members hinged at one pair of face ends and held together at the other face ends around the pipe by removable corrosion-resistant bolts.

This arrangement enables repairs to be easily and cheaply effected should damage occur to say one or more float units on a respective steel pipe by simply removing and replacing the defective float unit or units in-situ. However there still remains the danger that any damage may result in the loss of too much buoyancy and the pipeline sinking, thus making it more costly to effect repairs.

## SUMMARY OF THE INVENTION
It is an object of the invention to provide a float particularly to provide buoyancy to a water surface floating steel dredging line which reduces the cost of assembly, and repair and maintenance costs resulting from damage caused by external factors such as collisions with support ships and tugs, and extreme weather conditions.

According to the invention there is provided a float for buoyantly supporting an object such as a water surface steel pipe dredging line comprising at least two floatable sleeve members which are coupled together one inside the other, with the innermost sleeve dimensioned to receive a said steel pipe or object to be floated, and wherein each sleeve member is formed of at least two removably interconnected sleeve parts.

The advantage of this arrangement is that any damage to the float will in the majority of cases only occur to the outer sleeve member and indeed may only be present in one of the sleeve parts of that sleeve member. Thus if each sleeve member is advantageously composed of two halves and only one is damaged then material replacement costs alone will be reduced to one quarter of the cost of replacing a one-piece float unit of the type discussed in the prior art.

Moreover since it can be arranged that the inner sleeve member comprises two thirds of the buoyancy required the outer sleeve member can be considered as reserve buoyancy and if damaged the chances of the pipe sinking are considerably reduced.

Other features and advantages of the present invention will become apparent from the description that follows taken with reference to the enclosed drawings.

### BRIEF DESCRIPTION OF THE DRAWINGS

Embodiments of the invention will now be described by way of example with reference to the accompanying drawings wherein:

Figure 1 is a perspective view of a float for a surface steel pipe dredging line with a sleeve half on the outer sleeve removed;

Figure 2 is a perspective view of a float according to another embodiment of the invention with a longitudinal portion of a sleeve half of one of the outer sleeve halves removed; and

Figure 3 is a sectional view through a penant buoy according to another embodiment of the invention.

### BEST MODES OF CARRYING OUT THE PRESENT INVENTION

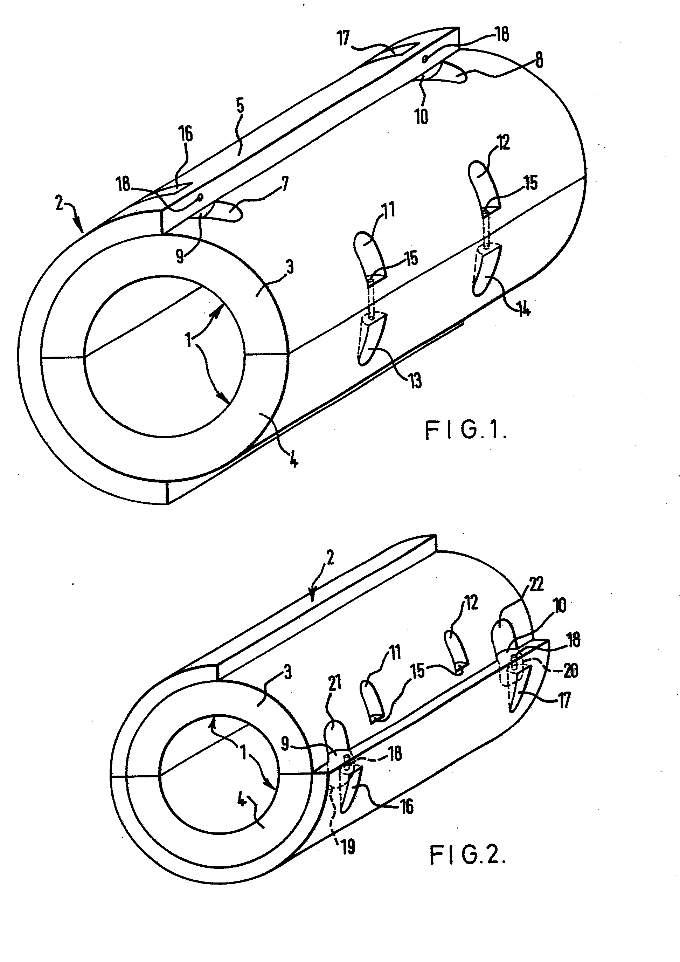

The float shown in Figure 1 comprises an inner and outer tubular sleeve 1 and 2 respectively, each sleeve being divided in an axial plane so that the inner sleeve 1 has two mating sleeve halves 3 and 4, and the outer sleeve 2 has also two mating sleeve halves, one sleeve half 5 being shown, the other removed for purposes of illustration.

In the embodiment shown in Figure 1 the axial planes containing the lines of separation or mating surfaces between the two sleeve halves 3 and 4, and the lines of separation or mating surfaces of the other sleeve halves of the outer sleeve 2, are at right angles.

The outer surface of the inner sleeve half 3 is provided with a pair of spaced recesses 7 and 8, and a portion of these recesses is positioned to receive corresponding protuberances 9 and 10 arranged in spaced relationship along the edges of the sleeve half 5 adjacent its mating surface with the other outer sleeve half, the recesses themselves extending across the line of separation as shown.

It will be readily understood (although not shown in Figure 1) that the sleeve half 4 will also be provided with a similarly positioned pair of such recesses 7 and 8 for receiving corresponding interlocking protuberances, such as 9 and 10, formed along the other line of separation with the sleeve half 5.

The removed mating sleeve half to sleeve half 5, is also provided with similarly positioned protuberances such as 9 and 10, and these protuberances are received in the remaining portions of the recesses 7 and 8 in the inner sleeve halves 3 and 4.

Reception of the protuberances 9 and 10 in the recesses 7 and 8 respectively serves to form means for effecting interlocking between the sleeve halves of the inner sleeve 1 and the outer sleeve 2 in the assembled condition of the float.

Two pairs of spaced pockets (11,12) are provided in the surface of the sleeve half 3 adjacent its mating surface with the sleeve half 4 (one pair being visible in Figure 1). Each pocket pair is opposed by a similar pair of pockets (13,14) in the mating sleeve 4 across the mating surface (again only one opposing pair being visible in Figure 1).

The opposed pocket pairs communicate through aligned internal passages 15, to thereby enable the mating sleeve halves 3 and 4 to be coupled together by means of fastening bolts (not shown). The pockets provide ready access to a workman when inserting or removing the coupling bolts or other similar clamping or fastening means.

The outer sleeve halves of which one sleeve half 5 is shown in Figure 1, are similarly coupled together across their lines of separation or mating surfaces (a representative pair of surface pockets (16,17)

and internal passageways 18 being shown in Figure 1), the variation being that the points of coupling of the outer sleeve halves lie in the axial plane at right angles to the axial plane containing the points of coupling between the inner sleeve halves 3 and 4.

The embodiment shown in Figure 2 is similar to that of Figure 1 with the variation that the lines of separation or mating surfaces between the inner and outer sleeve halves instead of being in orthogonal axial planes are arranged such that they lie in a single axial plane. The protuberances, 9 and 10, two of which are shown in an outer sleeve half in Figure 2, are then received in respective cooperating recesses which are formed on the sleeve halves 3 and 4 across the lines of separation, being shown in dotted outline as 19 and 20, and those for protuberances 9 and 10 of the other outer sleeve along the same line of separation, as 21 and 22.

Similar structural features are present along the other line of separation between the sleeve halves of the inner and outer sleeve members 1 and 2.

The float as described is extremely versatile and reduces considerably the cost of effecting repairs should damage occur to the float by for example constant banging against an attendant tug attempting to manoeuvre the line into position or under extreme weather conditions. It will be readily appreciated that it is much more convenient both costwise and in terms of the use of manpower, to have to replace only those sectional elements of the float which have been damaged while the pipeline is in use without having to tow the whole pipeline back to shore for disassembly. Moreover due to the two separate buoyant sleeves longitudinally arranged one inside the other on a respective pipe if the outer sleeve is damaged and its buoyancy nullified the buoyancy remaining in the inner sleeve is still sufficient to maintain the pipe afloat.

Although the invention has been illustrated in connection with its use in a water surface steel pipe dredging line, nevertheless it has other applications for example to pendant buoys.

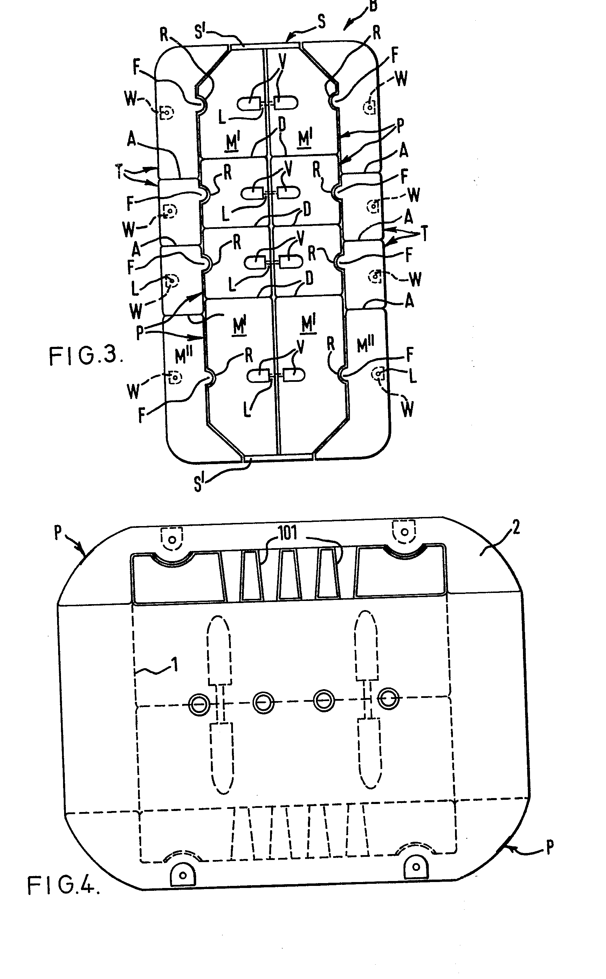

This is illustrated in Figure 3 where the steel central ballast stem S of a pendant buoy B is enclosed in a plurality of inner separable float elements P and outer interlocking removable float elements T.

As in the Figures 1 and 2 embodiments each inner float element P is composed of two mating half float sections M', which surround the stem S between stem retaining flanges S', the float sections M' themselves being surrounded by two mating half sections M''. In the embodiment shown the lines of separation between the float sections M' and M'' lie in axial planes which are at right angles.

The ends of the inner and outer float elements P and T abut one another with the abutting surfaces A of the outer elements T being staggered along the longitudinal axis relative to the abutting surfaces D of the inner elements P.

The float sections M' and M'' are each provided with aligned pockets along their respective mating edges (the pockets V in the inner section M' being visible in Figure 3 and those W in the outer sections M'' being shown in dotted outline). The pockets V and W are in communcation across the respective mating edges of the sections M' and M'' via internal passageways L for accommodating fastening bolts (not shown) to retain the sections M' and M'' together along their mating surfaces.

The mating half sections M'' are provided with diametrically opposed protuberances F which are received in cooperating recesses R in the outer surface of the float sections M' thereby to interlock the outer elements T with the inner elements P.

The float (or float parts) as described in the above embodiments is formed from an outer skin of rotationally moulded polyethylene filled with polyurethane foam to add strength to the structure.

Variations to the structure of the float as described will be apparent to those skilled in the art within the scope of the broad inventive concept of the present invention as defined in the appendant claims.

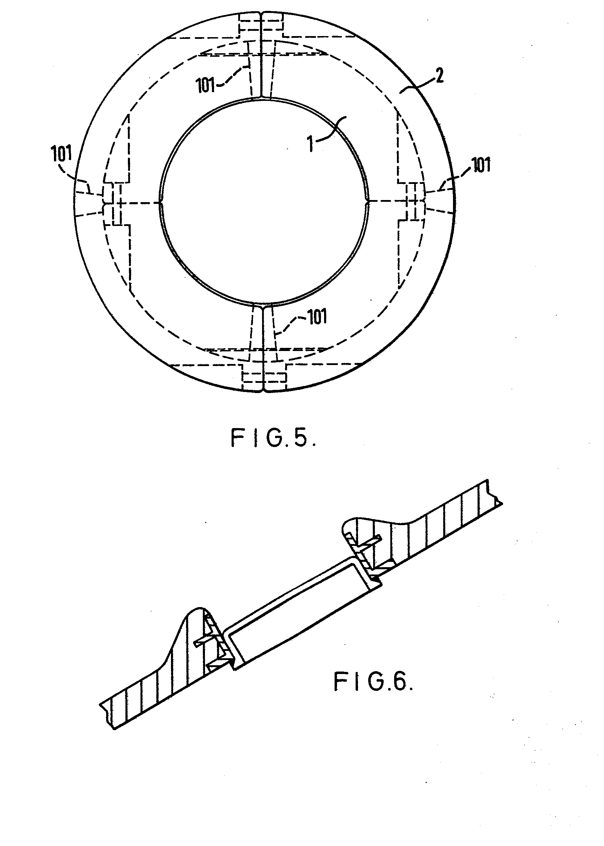

For example it is envisaged that the ends of the outer sleeve 2 of the Figure 1 and 2 embodiments will extend over the end faces of the inner sleeve 1 with its outer surface circumferentially decreasing uniformly to a circular inlet having a diameter equal to the internal diameter of the inner sleeve 1. This will provide protection for the ends of the float, similar to the Figure 3 configuration. This variation is shown in Figures 4 and 5 accompanying this disclosure.

The hollow float parts or sections as described in the previous embodiments are normally filled with polyurethane foam to provide strength to the struction and resistance to identation and disintegration upon collision with heavy objects during operational use. Moreover the use of foam filling of close cell polyurethane ensures that buoyancy is not drastically reduced if the outer skin of the float is damaged.

The use of foam is expensive and there are problems with disposal after the life of the float is ended either due to premature breakdown or with time.

Surprisingly the incorporation of foam between the inner and outer skins of the float has persisted through the years. It has been discovered however that its use can readily be dispensed with in an ingenious manner by introducing strategically positioned stiffening portions in the hollow float parts, such stiffening portions being integrally formed with the float parts during the rotational moulding process as preferably described in this disclosure.

Removal of the polyurethane filling gives an immediate advantage in that it allows the buoyancy of the float to be varied in a readily adjustable manner by incorporating suitably positioned ballast inlet and outlet port (also acting as an air vent) which can be activated to control the amount of water within the hollow structure at will.

The use of internal stiffening members instead of foam filling is illustrated in Figures 4 and 5, Figure 5 being an end view of the modified float while Figure 4 a side view thereof in part cross section. The float structure as shown,is otherwise identical to the Figures 1 and 2 embodiment but with the outer sleeve 2 extending over the end faces of the upper sleeve 1 in the manner referred to earlier, so protecting the end of the float.

The stiffening members are in the form of hollow conically formed elements 101 (although other shapes are possible) spaced interiorally and lengthwise of each sleeve half of the sleeves 1 and 2 open at the inner and outer surfaces thereof the element extending through the body of the sleeves from outer to inner skin.

The line of hollow conical elements 101, integrally formed with the float sleeve halves of the float during the moulding process as intrusions or voids, are preferably positioned midway between their mating surfaces so that in the Figure 1 assembly, where the axial planes containing the lines of separation between the inner and outer sleeve halves are at right angles, the conical elements in the outer sleeve halves lie along and above the lines of separation of the inner sleeve halves, and the conical elements in the inner sleeve half lie along and under the lines of separation of the outer sleeve halves of the float.

This arrangement provides the strength required at the weaker circumferential areas of the float assembly. Of course similar stiffening elements could be included at other positions in the body of the sleeve halves of the inner and outer sleeves 1 and 2.

The outer sleeve half 1 is provided with an air vent and ballasting inlet and outlet port shown in detail in Figure 6.

The position of a port is shown at P in Figure 4, that is on the turned over noses of the outer sleeve halves of the outer sleeve 1 & 2.

The port 4 allows the outer sleeve to be ballasted with sea water for example, during use, the amount of introduced water ballast being varied as required so permitting corresponding variation in desired buoyancy. This novel arrangement avoids the need to have to construct several sizes of floatation units so providing buoyancy factors of differing amount according to requirements as will be appreciated. One size will in general suffice, and the required buoyancy introduced in-situ by varying the ballast loading through the ports in the outer sleeve of the float.

The ports P are positioned on the sleeves so that where one port P in that sleeve resting on the water surface is submerged, the other port P in that sleeve is above the water line.

In this case the port P above water line may be used as an air vent to allow water to enter the sleeve through the submerged port P to the required loading.

That sleeve wholly above water line can of course be ballasted with water in an artificial manner as for example by a syphon technique.

The port P as shown in Figure 6 is formed of a stainless steel outer piece tabbed and moulded into the plastics skin of the moulded sleeve. The plug and seal ring then give an air tight seal between atmosphere and the inside of the sleeve.

Some of the attributes of the float of the invention may be summarised as follows:

A)   All floats are interchangeable providing they are from the same size unit.

B)   All floats are replaceable without having to remove connecting flanges or retainers. It should be possible to replace any section without having to take the pipe or similar, being supported out of service, simply by rotating the float until the damaged float part is out of the water.

C)   During adverse weather or heavy tidal conditions, where the float may be subjected to excessive impact and/or abrasion, should an outer float part become damaged the loss of buoyancy should only be 20-25% of the total. Whilst this may cause the affected pipe to sit slightly lower in the water, it should remain workable until such time as it is possible to replace or repair the unit.

D)   Once a damaged unit has been removed from service, providing that the damage is not too excessive, such as a large piece of plastic missing, leaving a large uncovered hole, it should be repairable. By removing the unit to a dry area, here it can be positioned so that the damaged area is at the lowest point, enabling all water to be drained out. When all possible moisture has been removed the unit may be turned over so that the area for repair is in an accessible position. Repairs may now commence in accordance with instructions supplied with a suitable repair kit.

Such a repair kit may include a high speed electronic hot air plastic welding torch and selections of material for making the repair.

Contractors' equipment and transport expenditure, cost savings through the number of re-useable units which will remain serviceable after the completion of each contract, and the greatly reduced replacement cost in being able to purchase replacement sections for those which have been damaged, will be self-evident.

0115677

- 11 -

CLAIMS

1.   A float for buoyantly supporting an object such as a water
surface steel pipe dredging line comprising at least two floatable
sleeve members which are coupled together one inside the other,
with the innermost sleeve  dimensioned to receive a said steel
pipe or object to be floated, and wherein each sleeve member is
formed of at least two removably interconnected sleeve parts.

2.   A float as claimed in claim 1 wherein the interconnected
sleeve parts have longitudinal mating surfaces defining lines
of separation between them, the sleeve parts in each sleeve member
being two in number.

3.   A float as claimed in claim 2 wherein the plane containing
the lines of separation of the inner sleeve parts  is orthogonal
to that containing the lines of separation of the outer sleeve
parts.

4.   A float as claimed in claim 2 wherein the lines of separation
between the inner and outer sleeve parts  lie in the same plane.

5.   A float as claimed in any preceding claim wherein the inner
and  outer sleeve members are hollow and filled with foam material.

6.   A float as claimed in any of claims 1 to 4 wherein the inner
and outer sleeve members are hollow, and a plurality of stiffening
members extend between the inner and outer skins of each one of
said sleeve parts.

7.   A float as claimed in claim 6 wherein the stiffening members
are hollow conical members.

8.   A float as claimed in claim 7 wherein the conicsl elements are positioned midway between the mating surfaces of the inner and outer sleeve parts of the sleeve members.

9.   A float as claimed in any preceding claim wherein the buoyancy of the inner sleeve member is of sufficient megnitude to provide the required buoyancy for the complete float.

10.   A pendant buoy provided with a float or floats as defined in any of claims 1 to 9.

11.   A float substantially as hereinbefore described with reference to and as illustrated in the accompanying drawings.

12.   A pendant buoy substantially as hereinbefore described with reference to and as illustrated in the accompanying drawings.

1/3

0115677

FIG.1.

FIG.2.

FIG.3.

FIG.4.

0115677

0115677

FIG.5.

FIG.6.

0115677

**European Patent Office**

**EUROPEAN SEARCH REPORT**

Application number

EP 83 30 7389

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 037 631 (UNIROYAL, INC.)<br>* Figures 1-8 * | 1,2,5 | F 16 L 1/04<br>E 02 F 7/10 |
| A | FR-A-2 306 394 (C. HITTERS)<br>* Figures 1-4 * | 1,2,5 | |
| A | FR-A-2 369 154 (PHOENIX GUMMIWERKE et al.)<br>* Figures 1-3 * | 1 | |
| A | US-A-2 445 628 (J. MULLER)<br>* Figure 1 * | 1 | |

TECHNICAL FIELDS
SEARCHED (Int. Cl. ³)

F 16 L
E 02 F
B 63 B

The present search report has been drawn up for all claims

| Place of search | Date of completion of the search | Examiner |
|---|---|---|
| THE HAGUE | 11-04-1984 | ANGIUS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503. 03.82